Europäisches Patentamt

European Patent Office

Office européen des brevets

(11) Publication number: **0 040 279**
**B1**

# EUROPEAN PATENT SPECIFICATION

(45) Date of publication of patent specification: **21.08.85**

(21) Application number: **80304380.1**

(22) Date of filing: **04.12.80**

(51) Int. Cl.⁴: **G 06 F 7/52**

(54) Binary divider.

(30) Priority: **05.05.80 US 146549**

(43) Date of publication of application:
**25.11.81 Bulletin 81/47**

(45) Publication of the grant of the patent:
**21.08.85 Bulletin 85/34**

(84) Designated Contracting States:
**DE FR GB**

(56) References cited:
**US-A-3 293 421**
**US-A-3 621 218**

(73) Proprietor: **CONTROL DATA CORPORATION**
**8100-34th Avenue South**
**Minneapolis Minnesota 55440 (US)**

(72) Inventor: **Desmonds, Daniel Joseph**
**1416 West County Road B**
**Roseville Minnesota 55113 (US)**

(74) Representative: **Caro, William Egerton et al**
**J. MILLER & CO. Lincoln House 296-302 High**
**Holborn**
**London WC1V 7JH (GB)**

Courier Press, Leamington Spa, England.

## Description

This invention relates to binary dividers for use with digital computers to perform a division.

Binary dividers as represented in the digital computer field are represented by two major classifications: restoring division and nonrestoring division. Restoring division is essentially the standard long division process as taught to children in elementary schools. This is primarily characterised in that if a new partial remainder is formed during a step of the division which is negative, it is not used. Only positive remainders smaller than the divisor are allowed to be used.

Nonrestoring division is where the sign of the remainder in each iteration of the division is used to determine whether to add or subtract the divisor in the next iteration of the division, rather than to determine whether or not to save the current remainder. Thus, the remainder is saved at every iteration of the division regardless of whether it is positive or negative. U.S. Patent Specifications Nos. 3 293 418 and 3 733 477 disclose arrangements which would be characterised as performing restoring division in the sense that only positive remainders are used. In fact, the process of selection of partial quotient bits in both these prior patent specifications ensures that only positive remainders can be generated. Because of this feature, nothing is, in fact, restored in either prior patent specification, and neither uses a negative remainder.

U.S. Patent Specification No. 3 621 218 discloses a binary divider comprising: an enable register for receiving a dividend; a divisor register for receiving a divisor; a generate register; a first carry-save adder connected to receive inputs from said enable register, said generate register and said divisor register for producing first possible partial remainders at each cycle of the divison process; first sign determining means connected to said first adder for determining the sign of the first possible partial remainders produced by the first adder; sign record means for storing the sign determined by the first sign determining means; output means for providing outputs of first and second possible test operands controlling the next cycle of the division process; and a quotient register connected to an output of said sign record means for storing quotient bits as they are developed.

U.S. Specification No. 3 293 421 indicates that a separately-derived quantity may be used with an adder and a substractor in the same circuit to compute quantities which are thereafter selected in performing a division.

The present invention seeks to provide a system in which the sum of the partial remainder and the divisor as well as the sum with the complement of the divisor are simultaneously available.

Thus, according to the present invention there is provided a binary divider of the type detailed above characterised by further comprising: a second carry-save adder which is connected to receive inputs from said enable register, said generate register and the complement of the contents of said divisor register for producing second possible partial remainders at each cycle of the division process; and second sign determining means connected to said second adder for determining the sign of the second possible partial remainders produced by the second adder, and further characterised in that the sign record means comprises flip-flop means for storing the sign of the partial remainder selected on the next preceding cycle of the division process, and the output means comprises adder select gate means for gating the outputs of one of said adders to said enable register and to said generate register for a further cycle of the division process, said adder select gate means being connected to said flip-flop means to provide the sign of the selected partial remainder of each cycle of the division process and to receive the stored sign of the preceding partial remainder and to receive an output from said first and second sign determining means for determining the sign of the possible partial remainder of each cycle of the division process for use in determining which of said adder outputs is to be gated.

The binary divider according to the present invention differs from the prior art by employing two carry-save adders for simultaneously subtracting and adding the current partial remainder in performing a division, whereas in U.S. Specification No. 3 293 421 an adder and a subtractor are used in connection with the separately derived quantity which goes through delay lines, an additional subtractor being required to perform a further sign determining function.

The binary divider of the present invention may have a first holding register connected to the first carry-save adder for holding the results of the first carry-save adder, and a second holding register connected to the second carry-save adder for holding the results of the second carry-save adder, the first and second holding register being connected to said first and second sign determining means respectively.

The invention is illustrated, merely by way of example, in the accompanying drawings, in which:—

Figure 1 is a left-hand portion, Figure 2 a cental portion and Figure 3 a right-hand portion of a block diagram of an embodiment of a binary divider according to the present invention; and

Figure 4 is a detailed schematic of the binary divider shown in Figures 1 to 3.

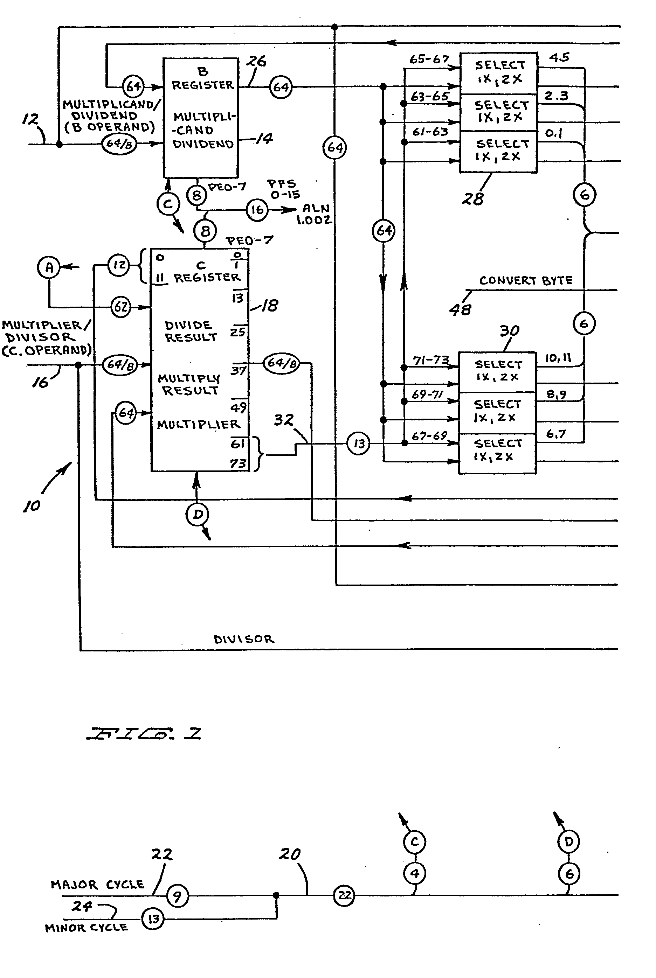

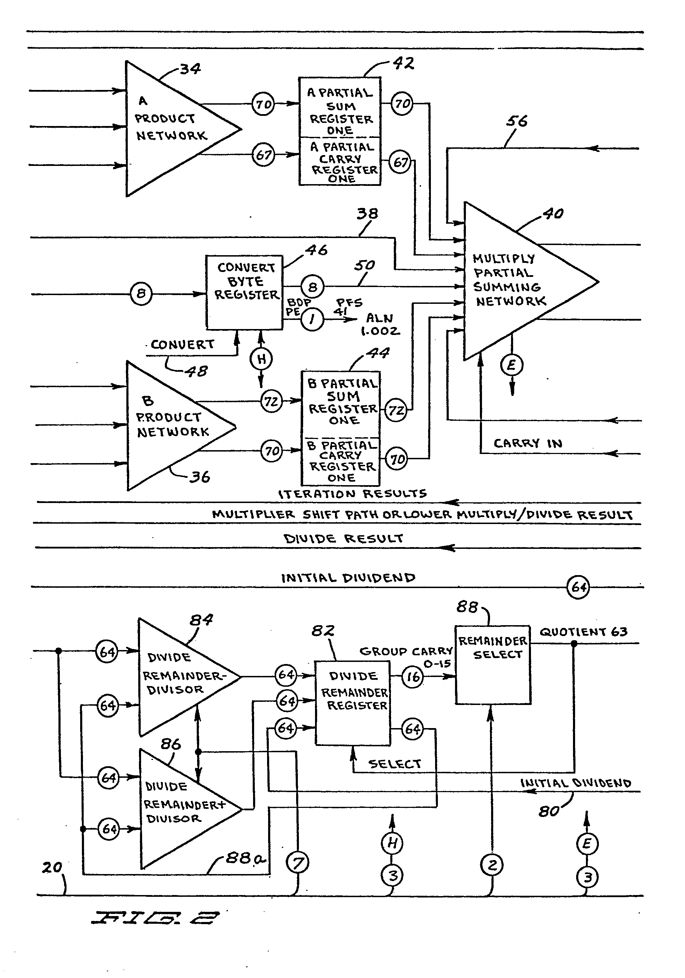

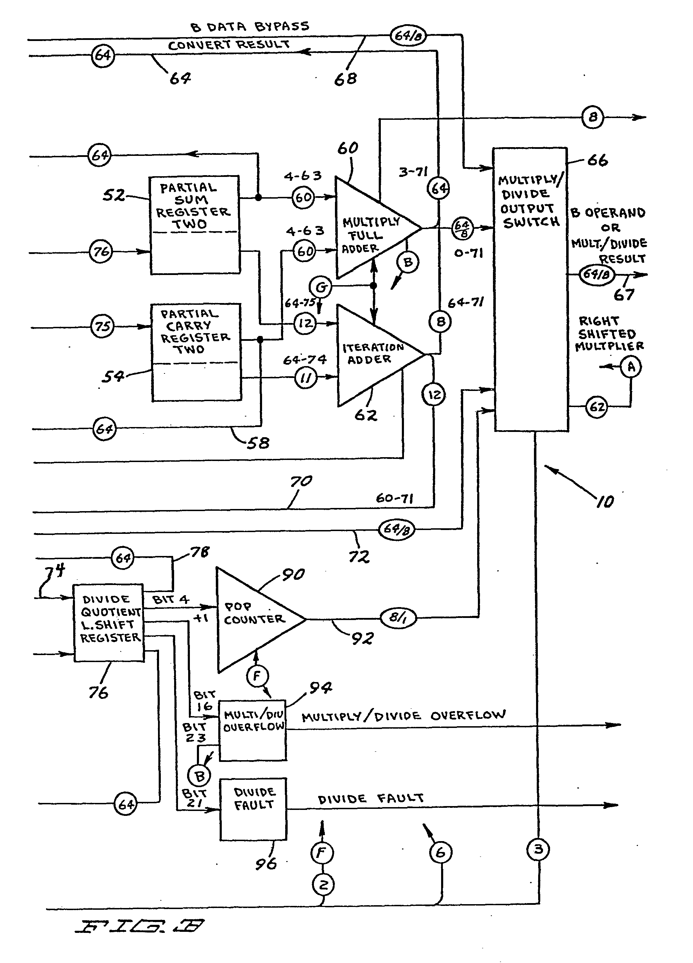

Referring now to Figures 1 to 3, an embodiment of a binary divider 10 according to the present invention is shown. In the drawings, circled numbers represent the bit width of trunks. Corresponding circled capital letters with arrows represent interconnections.

An input operand is provided on a data bus 12 to a B register 14 which contains a multiplicand

and a dividend at various portions of a divide cycle. Similarly, an operand is provided on an input bus 16 to a C register 18 which at various portions of the divide cycle contains a multiplier or a divisor. In the register 18, the least significant 13 bits of the multiplier are examined, the multiplier is right shifted and the multiply result is moved into the vacant bit position on each iteration.

Control signals are provided on a control input bus 20 which receives different control elements from different sources of a computer on a major cycle control line 22 and a minor cycle control line 24 to control the operation of the binary divider. These control signals are connected respectively as shown by the capital letter-circled arrow symbols in Figures 1 to 3. The register 14 has an output data bus 26 which is connected with a first group of selection networks 28 and with a second group of selection networks 30. An output data bus 32 from the register 18 is connected in parallel in a similar fashion to the first group of selection networks 28 and the second group of selection networks 30. These selection networks 28, 30 serve to select various possible combinations to be gated into a multiply or product network. The selection networks 28 are connected to an A product network 34 while the selection networks 30 are connected to a B product network 36. A further output from the selection networks 28, 30 is combined on to a data bus 38 which provides an input to a partial summing network 40.

The output of the A product network 34 consists of a group of partial sums and a group of partial carries which is provided as an input to a partial sum partial carry register 42. Similarly the output of the B product network 36 is provided to data buses as partial sums and partial carries and thereby to a partial sum partial carry register 44. The output of the partial sum partial carry register 42 and the output of the partial sum partial carry register 44 is all provided as inputs to the partial summing network 40.

A convert byte register 46 receives input data on a convert byte bus 48 and provides an input on a bus 50 to the partial sum network 40. The output of the partial sum network 40 is provided to a partial sum register 52 and to a partial carry register 54. Both of the partial sum register and the partial carry register have output data buses 56, 58, respectively, which return to provide an input to the partial sum network 40. Both the partial sum register 52 and the partial carry register 54 provide an input on a data bus to a multiply full adder 60. Similarly, both the partial sum register 52 and the partial carry register 54 provide an input to an iteration adder 62. An output of the multiply full adder 60 is provided on a data bus 64 as a possible input to the register 14. A multiply/divide output switch 66 receives the output of the multiply full adder 60 as an input. Other possible inputs to the multiply/divide output switch 66 is a B data bypass bus 68 which is simply the data operand on the data bus 12.

A portion of the output of the iteration adder 62 is combined with the output of the multiply full adder 60 and provides a component on the data bus 64 as an input to the register 14. Another portion of the output operand from the iteration adder 62 is provided on a data bus 70 as a possible input to the register 18. The register 18 has a data bus connection 72 as a possible input to the multiply/divide output switch 66. The part of the binary divider from the selection networks 28, 30 to the network 40 and to the registers 52, 54 form a multiplier according to U.S. Patent Specification No. 3 814 924. All of this is shown to illustrate sharing of arithmetic components in a pipeline computer.

The data bypass bus 68 conveying the operand from the data bus 12 also has an additional data input bus 74 to a divide quotient left shift register 76. The data on the input bus 74 provides the initial dividend to the left shift register 76. The output of the left shift register 76 is provided on a data bus 78 as the divide result as a possible input to the register 18. The left shift register 76 also gates the initial dividend output on a data bus 80 as an input to a divide remainder register 82 which receives a pair of possible inputs from carry-save adders 84, 86. The divide remainder register 82 provides an output on data bus 88$a$ to the carry-save adders 84, 86. A remainder selection network 88 produces an output selection signal which is connected with the register 82 to select a negative remainder divisor possibility from the carry-save adder 84 or the positive remainder divisor selection from the carry-save adder 86. The divisor is provided to the carry-save adders 84, 86 by an extension of the data bus 16 while the second input to the carry-save adders 84, 86 is provided by an output of the register 82.

A population counter 90 receives an input from the left shift register 76 and provides an output to the multiply/divide output switch 66 by means of a data bus 92. A control response device 94 responds to the left shift register 76 by producing a multiply/divide overflow signal in response to that fault condition of the divide network. Similarly a device 96 provides a controlled response from the output of register 76 to indicate a divide fault.

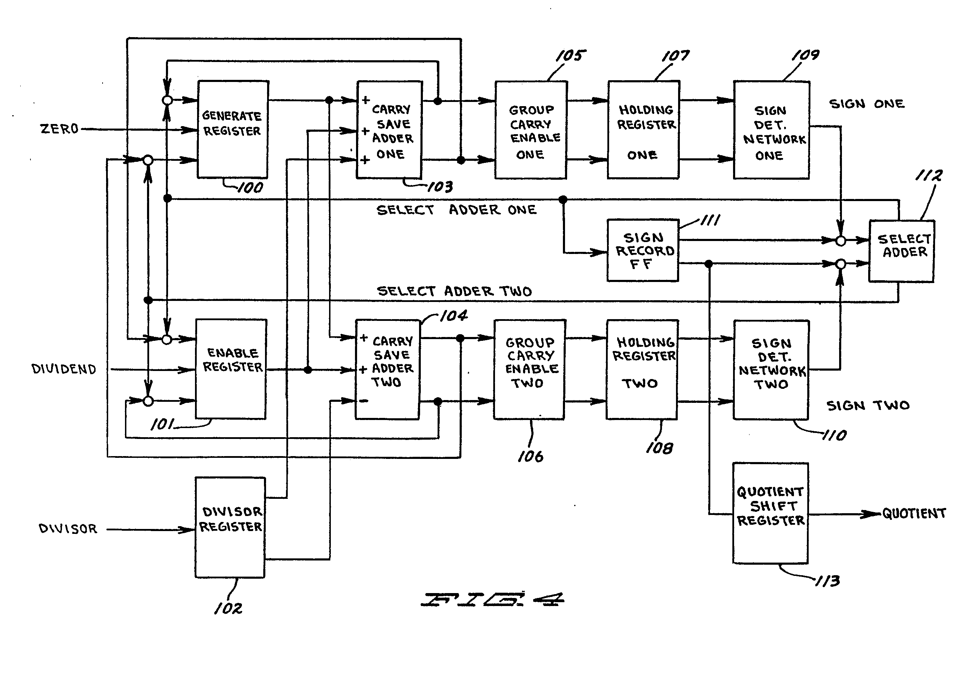

Referring now to Figure 4, a generate register 100 receives a data input of all zeros and is labelled zero. The dividend is provided as an input to an enable register 101 and the divisor is provided as the input to a divisor register 102.

The output of the register 100 is connected with a first carry-save adder 103 and a second carry-save adder 104. Similarly the outputs of the registers 101, 102 are connected with the carry-save adders 103, 104 except that the contents of register 102 is complemented as input to the carry-save adder 104, as shown by the minus sign symbol.

The carry-save adder 103 is connected with a first group carry-enable network 105 while the carry-save adder 104 is connected with a second group carry enable network 106. The contents of the networks 105, 106 are gated to first and second holding registers 107, 108, respectively. The outputs of the registers 107, 108 are connected with first and second sign determination networks 109, 110 respectively. The networks 109, 110 are connected with an adder select network 112 which is in turn connected to provide a return input to the registers 100, 101 for successive iterations of the division.

A sign record flip-flop 111 responds to the output of the network 112 to provide a gate control signal to control which of the networks 109, 110 provides the current partial remainder. The final quotient is developed in a quotient shift register 113.

The operation of an embodiment of the binary divider according to the present invention and as described above will now be explained with particular reference to Figure 4. Carry-save adders have the capability to half-add three $n$-bit operands, forming an $n$-bit partial sum and an $n$-bit partial carry (or, bit sum and bit carry). A hardware implementation generally requires about six gates per bit, and has a maximum delay of two gate delays. A full sum, having all carries propagated, can be produced by left-shifting the partial carry and adding it (full add) to the partial sum.

Logic expressions for a carry-save adder are as follows:

Let X, Y and Z represent three $n$-bit operand to be summed:

Enable
$$(E_n)=X_n \oplus Y_n$$
Generate
$$(G_n)=X_n \cdot Y_n$$

Partial Sum

$$(PS_n)=E_n \oplus Z_n (=X_n \oplus Y_n \oplus X_n)$$

Partial Carry

$$(PC_n)=G_n+E_n \cdot Z_n (=X_n Y_n+X_n Z_n+Y_n Z_n)$$

where $\oplus$ is an exclusive OR function, $+$ is an OR function and $\cdot$ is an AND function.

First, assume that both the divisor and the dividend are positive, signed, $n$-bit binary numbers. Two's complement arithmetic is used throughout. The divisor must be pre-normalized: the first bit to the right of the sign bit must be a 1. In a floating point number system, this is easily accomplished by left-shifting the divisor until the second most significant bit is a 1, and then subtracting the number of places shifted from the exponent.

At the start of a divide operation, the $n$-bit divisor is entered into the $n$-bit divisor register 102, the $n$-bit dividend is loaded into the rightmost $n$ bits of the $n+1$-bit enable register 101. The most significant bit of the register 101, all $n$ bits of the register 100, and the sign record flip-flop 111 are initially set to 0. Setting the sign record to 0 initially forces the first iteration to compute, and save, dividend *minus* divisor.

The carry-save adder 103 forms the $n$-bit partial sum and partial carry produced by adding the contents of the registers 100, 101, 102. Similarly, the carry-save adder 104 forms the sum of the registers 100, 101, and the two's complement of the divisor. The outputs of the adders 103, 104 are left-shifted one place, and one of them is gated into the registers 100, 101 by one of two control signals, SELECT ADDER ONE and SELECT ADDER TWO. Note that the SELECT ADDER TWO signal is always the complement of the SELECT ADDER ONE signal.

The time delay of the carry-save adders used is two gate delays, so the total time needed in the loop back to the registers 100, 101, including the registers themselves, is three gate delays.

The output of the carry-save adders 103, 104 is also connected to the first rank of the networks 105, 106 respectively. Each bit of the four outputs represents a carry or an enable for a 4-bit group of the carry-save adder 103 or 104. Thus, 4(n/4) (rounded upwards) bits are required for the group carries and enables.

The group generates and group enables are entered into the registers 107, 108. The networks 105, 106 are each one rank in depth, so the total delay from the registers 100, 101 to the registers 107, 108 (including the registers 100, 101 themselves) is four gate delays.

The registers 107, 108 drive the remaining two ranks of the networks 109, 110, which in turn produce the sign of the results of the carry-save adders 103, 104.

The sign record flip-flop 111 is set if the previous cycle was an add cycle and the output of the carry-save adder 103 was selected. The adder select network 112 uses the sign record flip-flop and the current signs from the networks 109, 110 to determine which operation to perform on the next cycle. The SELECT ADDER ONE signal is enabled if the sign record flip-flop 111 is set, and the output of the network 109 is negative, or if the sign record flip-flop is cleared and the output of the network 110 is positive.

The SELECT ADDER ONE signal performs three functions: it gates the results from the carry-save adder 103 into the registers 100, 101; it sets the sign record flip-flop 111 for the next cycle, and, since it represents the current quotient bit, its value is shifted into the quotient shift register 113.

The SELECT ADDER TWO signal gates the results from the carry-save adder 104 into the registers 100, 101.

The path length from the registers 107, 108 through the networks 109, 110 and through the adder select network 112, to the registers 100, 101, the sign record flip-flop 111, and to the quotient shift register 113, is four gate delays in length, including the registers 107, 108.

The quotient shift register 113 is a serial-in, parallel-out shift register. On each divide cycle, the quotient shift register is left-shifted one place, and the new quotient bit is entered into the least significant bit position. At the end of n+1 cycles, where *n* is the number of bit positions in the divisor, dividend, and quotient, the final quotient is correctly positioned in the quotient shift register so that it may be read out in parallel.

Since the longest path delay is four gate delays in length, the clock period may be set to be four gate delays plus an allowance for the total clock skew introduced by the fanout of the clock signal. For example, if gate delay is typically 1.5 *ns*, and the clock skew is 1.0 *ns*, then the divider could operate comfortably with an 8.0 *ns* clock period. A complete processor, of which the binary divider is part, would likely use a 16.0 *ns* clock period, assuming the same gate delay value applies throughout.

n+1 divide cycles are required to produce an n-bit quotient. Since two divide cycles can be performed during one processor cycle, (n+1)/2 processor cycles are required to produce an n-bit quotient. Thus two quotient bits are developed per processor cycle.

## Claims

1. A binary divider comprising: an enable register (101) for receiving a dividend; a divisor register (102) for receiving a divisor; a generate register (100); a first carry-save adder (103) connected to receive inputs from said enable register (101), said generate register (100) and said divisor register (102) for producing first possible partial remainders at each cycle of the division process; first sign determining means (109) connected to said first adder (103) for determining the sign of the first possible partial remainders produced by the first adder (103); sign record means (111) for storing the sign determined by the first sign determining means (109); output means (112) for providing outputs of first and second possible test operands controlling the next cycle of the division process; and a quotient register (113) connected to an output of said sign record means (111) for storing quotient bits as they are developed, characterised by further comprising: a second carry-save adder (104) which is connected to receive inputs from said enable register (101), said generate register (100) and the complement of the contents of said divisor register (102) for producing second possible partial remainders at each cycle of the division process; and second sign determining means (110) connected to said second adder (104) for determining the sign of the second possible partial remainders produced by the second adder (104) and further characterised in that the sign record means comprises flip-flop means (111) for storing the sign of the partial remainder selected on the next preceding cycle of the division process, and the output means comprises adder select gate means (112) for gating the outputs of one of said adders (103, 104) to said enable register and to said generate register for a further cycle of the division process, said adder select gate means (111) being connected to said flip-flop means (111) to provide the sign of the selected partial remainder of each cycle of the division process and to receive the stored sign of the preceding partial remainder and to receive an output from said first and second sign determining means (109, 110) for determining the sign of the possible partial remainder of each cycle of the division process for use in determining which of said adder outputs is to be gated.

2. A binary divider as claimed in claim 1 having a first holding register (107) connected to the first carry-save adder (103) for holding the results of the first carry-save adder (103), and a second holding register (108) connected to the second carry-save adder (104) for holding the results of the second carry-save adder (104), the first and second holding register (107, 108) being connected to said first and second sign determining means (109, 110) respectively.

## Revendications

1. Diviseur binaire comprenant: un registre (101) de validation servant à recevoir un dividende; un registre (102) de diviseur servant à recevoir un diviseur; un registre (100) de génération; un premier additionneur (103) à conservation de report connecté de façon à recevoir des signaux d'entrée de la part dudit registre (101), de validation, dudit registre (100) de génération et dudit registre (102) de diviseur afin de produire des premiers restes partiels possibles à chaque cycle du processus de division; un premier moyen (109) de détermination de signe connecté audit premier additionneur (103) afin de déterminer le signe des premiers restes partiels possibles produits par le premier additionneur (103); un moyen (111) d'enregistrement de signe servant à emmagasiner le signe déterminé par le premier moyen (109) de détermination de signe; un moyen de sortie (112) servant à produire des signaux de sortie de premier et deuxième opérandes d'essai possibles commandant le cycle suivant du processus de division; et un registre (113) de quotient connecté à une signal de sortie dudit moyen (111) d'enregistrement de signe afin d'emmagasiner des bits de quotient au fur et à mesure de leur création, caractérisé en ce qu'il comprend en outre: un deuxième additionneur (104) à conservation de report qui est connecté de façon à recevoir des signaux d'entrée de la part dudit registre (101) de validation, dudit registre (100) de génération et le complément du contenu dudit registre (102) de diviseur afin de produire des deuxièmes restes partiels possibles à chaque cycle du processus de division; et un deuxième moyen (110) de détermination de signe connecté audit deuxième additionneur (103) afin de déterminer le signe des deuxièmes restes partiels possibles produits par le deuxième additionneur (104), et caractérisé en outre en ce que le moyen d'enregistrement de signe comprend un moyen basculeur (111) servant à emmagasiner le signe du reste partiel sélectionné lors du cycle immédiatement précédent du processus du division, et le moyen de sortie comprend un moyen (112) de déclenchement de sélection d'additionneur servant à faire passer les signaux de sortie de l'un desdits additionneurs (103, 104) audit registre de validation et audit registre de génération pendant un autre cycle du processus de division, ledit moyen (112) de déclenchement de sélection d'additionneur étant connecté audit moyen basculeur (111) afin de produire le signe du reste partiel sélectionné de chaque cycle du processus de division, de recevoir le signe emmagasiné du reste partiel précédent, de recevoir un signal de sortie desdits premier et deuxième moyens (109, 110) de détermination de signe afin de déterminer le signe du reste partiel possible de chaque cycle du processus de division à utiliser pour déterminer lequel desdits signaux de sortie d'additionneur doit être laissé passer.

2. Diviseur binaire selon la revendication 1, possèdant un premier registre de maintien (107) connecté au premier additionneur (103) à conservation de report afin de maintenir les résultats du premier additionneur (103) à conservation de report, et un deuxième registre de maintien (108) connecté au deuxième additionneur (104) à conservation de report afin de maintenir les résultats du deuxième additionneur (104) à conservation de report, les premier et deuxième registres de maintien (107, 108) étant respectivement connectés auxdits premier et deuxième moyens (109, 110) de détermination de signe.

**Patentansprüche**

1. Binärer Dividierer mit einem Freigaberegister (101) zum Empfang eines Dividenden, mit einem Divisorregister (102) zum Empfang eines Divisors, mit einem Generierregister (100), mit einem ersten einen Übertrag erzeugenden Addierer (103), der zum Empfang von Eingangssignalen von dem Freigaberegister (101), dem Generierregister (100) und dem Divisorregister (102) angeschaltet ist, um erste eventuelle Teilreste bei jedem Zyklus des Divisionsvorgangs zu erzeugen, mit ersten mit dem ersten Addierer (103) verbundenen Vorzeichenbestimmungseinrichtungen (109) zur Bestimmung des Vorzeichens der ersten, von dem ersten Addierer (103) erzeugten eventuellen Teilreste, mit Vorzeichenaufzeichnungseinrichtungen (111) zum Speichern des von den ersten Vorzeichenbestimmungseinrichtungen (109) bestimmten Vorzeichens, mit Ausgangseinrichtungen (112) zur Lieferung von Ausgängen von ersten und zweiten eventuellen Testoperanden, die den nächsten Zyklus des Divisionsvorgangs steuern, und mit einem Quotientenregister (113), das mit einem Ausgang der Vorzeichenaufzeichnungseinrichtungen (111) verbunden ist, um Quotienten-Bits zu speichern, wenn sie erzeugt werden, dadurch gekennzeichnet, daß der binäre Dividierer weiterhin einen zum Empfang von Eingangssignalen von dem Freigaberegister (101) und dem Generierregister (100) sowie dem Komplement des Inhaltes des Divisorregisters (102) angeschalteten zweiten einen Übertrag erzeugenden Addierer (104), der zweite eventuelle Teilreste bei jedem Zyklus des Divisionsvorgangs erzeugt, sowie zweite Vorzeichenbestimmungseinrichtungen (110) aufweist, die mit dem zweiten Addierer (104) verbunden sind, um das Vorzeichen der zweiten, von dem zweiten Addierer (104) erzeugten eventuellen Teilreste zu bestimmen, daß die Vorzeichenaufzeichnungseinrichtungen Flip-Flop-Einrichtungen (111) zum Speichern des Vorzeichens des Teilrestes aufweisen, der bei dem nächstvorhergehenden Zyklus des Divisionsvorgangs ausgewählt wird, daß die Ausgangseinrichtungen Addierer-Auswahlgattereinrichtungen (112) zur gesteuerten Weiterleitung der Ausgangssignals eines der Addierer (103, 104) an das Freigaberegister und an das Generierregister für einen weiteren Zyklus des Divisionsvorganges aufweisen, und daß die Addierer-Auswahlgattereinrichtungen (112) mit den Flip-Flop-Einrichtungen (111) zur Leiferung des Vorzeichens des ausgewählten Teilrestes jedes Zyklus des Divisionsvorgangs und zum Empfang des gespeicherten Vorzeichens des vorhergehenden Teilrestes und zum Empfang eines Ausgangssignals von den ersten und zweiten Vorzeichenbestimmungseinrichtungen (109, 110) angeschaltet sind, um das Vorzeichen des eventuellen Teilrestes jedes Zyklus des Divisionsvorgangs zur Verwendung bei der Festlegung, welcher der Addierer-Ausgänge gesteuert weitergeleitet wird, zu bestimmen.

2. Binärer Dividierer nach Anspruch 1, dadurch gekennzeichnet, daß ein erstes Halteregister (107) mit dem ersten einen Übertrag erzeugenden Addierer (103) zum Festhalten der Ergebnisse des ersten einen Übertrag erzeugenden Addierers (103) verbunden ist, daß ein zweites Halteregister (108) mit dem zweiten einen Übertrag erzeugenden Addierer (104) zum Festhalten des Ergebnisses des zweiten einen Übertrag erzeugenden Addierers (104) verbunden ist, und daß die ersten und zweiten Halteregister (107, 108) mit den ersten bzw. zweiten Vorzeichenbestimmungseinrichtungen (109, 110) verbunden sind.

*FIG. 1*

FIG. 2

FIG.3

0 040 279

FIG. 4

**112** SELECT ADDER

**109** SIGN DET. NETWORK ONE — SIGN ONE

**107** HOLDING REGISTER ONE

**105** GROUP CARRY ENABLE ONE

**103** CARRY SAVE ADDER ONE

**111** SIGN RECORD FF

SELECT ADDER ONE

**100** GENERATE REGISTER

ZERO

**110** SIGN DET. NETWORK TWO — SIGN TWO

**108** HOLDING REGISTER TWO

**106** GROUP CARRY ENABLE TWO

**104** CARRY SAVE ADDER TWO

SELECT ADDER TWO

**101** ENABLE REGISTER

DIVIDEND

**113** QUOTIENT SHIFT REGISTER — QUOTIENT

**102** DIVISOR REGISTER

DIVISOR

4